# EUROPEAN PATENT APPLICATION

(11) **EP 1 675 237 A2**
(43) Date of publication of application: **28.06.2006**
(21) Application number: 05028149.2
(22) Date of filing: 22.12.2005
(51) Int. Cl.: H02G 3/12

(54) **Fixing apparatus for wiring box**

(30) Priority: 23.12.2004 IT VE20040053
(71) Applicant: Chinello, Giannino, 35028 Piove di Sacco (IT); Carraro, Antonio, 35028 Piove di Sacco (IT)
(72) Inventor: Chinello, Giannino, 35028 Piove di Sacco (IT); Carraro, Antonio, 35028 Piove di Sacco (IT)

(57) **Abstract**

A fixing enclosure for wiring accessory inserts in electrical installations, characterised by comprising an intermediate element (2) fixable to the masonry, a box (6) for holding the wiring accessory, and means (8) for adjustably fixing said box to said intermediate element.

## Description

The present invention relates to a fixing enclosure for wiring accessory inserts in electrical installations.

Wiring accessory boxes for electrical installations are known consisting of a hollow plastic parallelepiped body of standard dimensions, which is positioned in a recess formed in masonry while in its rough state and fixed by mortar after the ends of flexible conduit for carrying electric cables have been inserted through holes provided in the box walls.

Currently, having made the chases and recesses in the rough masonry for installing the electrical equipment, the wiring accessory boxes are mounted directly in the recesses and fixed by the progressive hardening of the mortar.

However, this method of operation presents serious operational and practical problems in that the boxes are often too deeply inserted or project too much from the wall (plaster) surface, with the result that the bricklayer has to apply a greater thickness of mortar or even break the wall and reposition the box.

To this must be added the fact that the smooth surface of the box base does not provide an effective grip for the mortar, hence the box moves after positioning and sometimes becomes detached therefrom by moving during application of the flexible conduit through which the electric cables pass.

The solution of filling the recess with a greater quantity of mortar leads to other drawbacks, and in particular:
- the mortar may fall out due to its weight.
- a greater effort is required to break it if the box is positioned incorrectly,
- a certain difficulty and inaccuracy in the work,
- a useless and costly time wastage.

An object of the invention is to provide a fixing enclosure for wiring accessory inserts which enables the box to be correctly positioned within the recess.

This and other objects which will be apparent from the ensuing description are attained according to the invention by a fixing enclosure for wiring accessory inserts as described in claim 1.

A preferred embodiment of the present invention is described in detail hereinafter with reference to the accompanying drawings, in which:

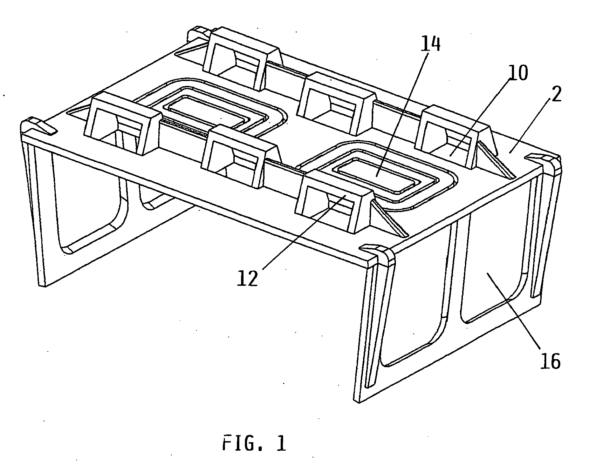

- Figure 1: is a perspective view of an intermediate element according to the invention,

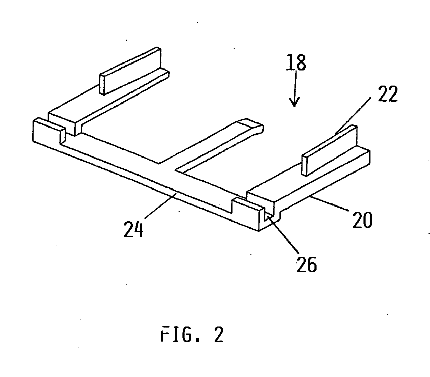

- Figure 2: shows the slider,

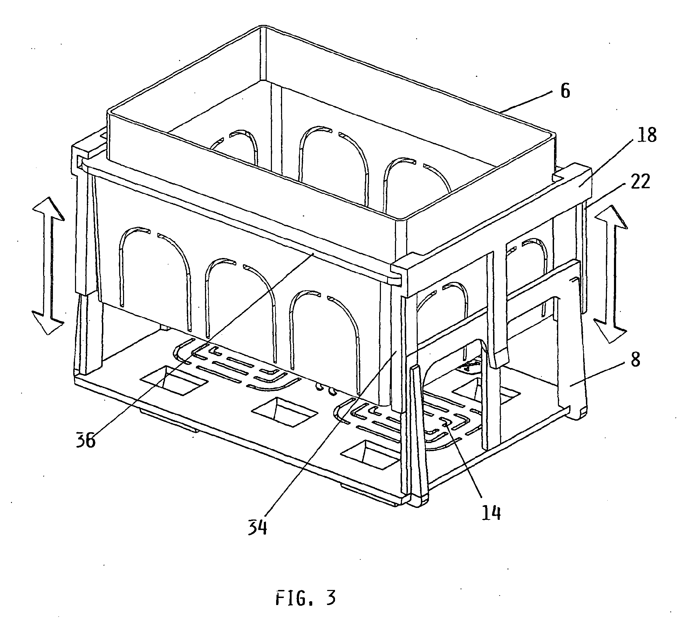

- Figure 3: shows these assembled, and

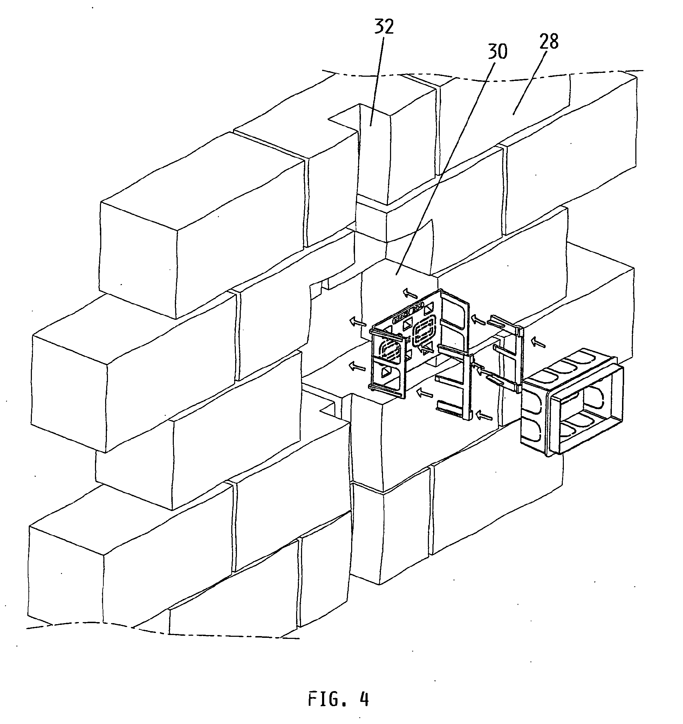

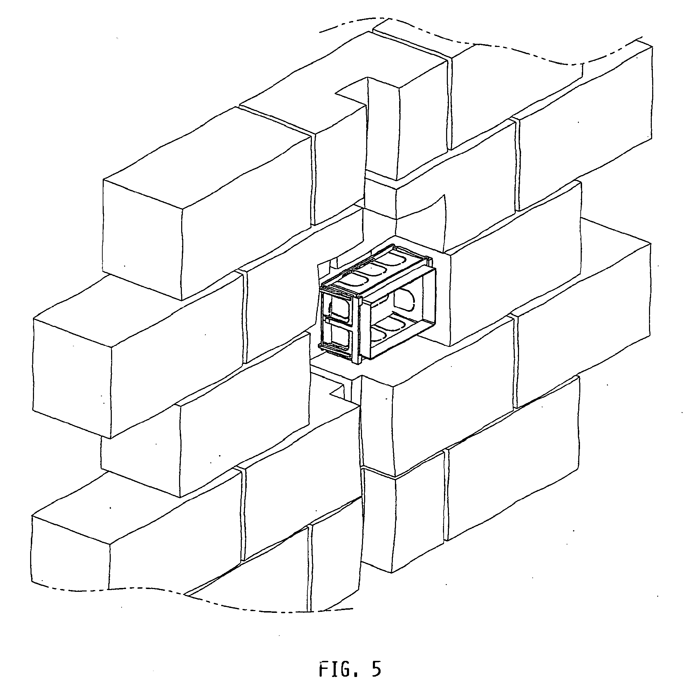

- Figures 4 and 5: show the enclosure of the invention during its assembly.

As can be seen from the figures the fixing enclosure for wiring accessory inserts according to the invention is of plastic construction and comprises substantially a rectangular plate 2 bounded by two sidepieces 8, and a box 6 for supporting the wiring accessory inserts.

The plate 2 comprises in its surface a plurality of holes 10 faced by gripping bridge pieces 12.

The plate 2 also comprises two push-out holed regions 14 which, when removed, form a passageway for the flexible conduit.

The surfaces of the sidepieces 8 mutually converge towards their free end and comprise apertures 16 substantially corresponding to the push-out portions provided in the enclosure sidepieces.

The support element also comprises two E-shaped sliders 18 with their end portions 20 presenting two ribs 22, and with that portion 24 perpendicular to these latter comprising two grooves 26 at its ends.

The enclosure of the invention is used in the following manner:
when the rough masonry 28, the recesses 30 and the chases 32 leading to them have been completed, cement mortar is applied to the bottom of the recess and the support element is pressed in so that the gripping bridge pieces 12 are gripped by the mortar.

If chases are also present in the bottom of the recess 30, the regions 14 are pushed out to allow free passage to the conduits.

When the mortar has set, the installer applies the sliders 18 to the sidepieces 8 of the support element, the sliders remaining fixed thereon by the elastic engagement of the end portions 20 and of the central portion 24 which straddle the sidepieces.

After removing the push-out portions through which the cables are to pass, the installer inserts the wiring accessory box which by means of the ribs 34 present on its side walls becomes interposed between the ribs 22 of the E-shaped slider 18 and remains engaged with the edge 36 of the grooves 26, but is free to slide along the support element.

When the plaster is to be applied, the bricklayer slides the box such as to position the edge of its aperture flush with the future surface of the finished plaster.

When the plaster has set, the electrical connections are made to the wiring accessory inserts.

From the aforegoing it is apparent that the enclosure of the invention presents numerous advantages, and in particular:
- it enables the box to be easily, rapidly and comfortably positioned within the recess, flush with the plaster,
- it enables the connections to be easily made as the wiring accessory box is free to move within the recess,
- it reliably grips the fresh mortar at its base by virtue of the presence of the bridge pieces.

## Claims

1. A fixing enclosure for wiring accessory inserts in electrical installations, **characterised by** comprising an intermediate element (2) fixable to the masonry, a box (6) for holding the wiring accessory, and means (8) for adjustably fixing said box to said intermediate element.

2. An enclosure as claimed in claim 1, **characterised in that** the intermediate element is provided with gripping appendices (12).

3. An enclosure as claimed in claim 1, **characterised in that** the intermediate element comprises a plate (2) provided with appendices (8) substantially perpendicular thereto, for slidably engaging at least two facing surfaces of the box (6).

4. An enclosure as claimed in claim 2, **characterised in that** the appendices (12) are provided on the outer surface of the plate and are bridge-shaped.

5. An enclosure as claimed in claim 1, **characterised in that** the plate (2) is of rectangular shape, from its minor sides there branching two sidepieces (8).

6. An enclosure as claimed in claim 5, **characterised in that** the sidepieces (8) converge towards their free end.

7. An enclosure as claimed in claim 1, **characterised by** comprising, for application to the sidepieces (8), two sliders (18) provided with elements for engaging the wiring accessory box.

8. An enclosure as claimed in claim 6, **characterised in that** said sliders (18) are E-shaped, with their end portions provided with ribs (22) for engaging the wiring accessory box.

9. An enclosure as claimed in claim 1, **characterised in that** the plate comprises push-out portions (14).
